# EUROPEAN PATENT SPECIFICATION

(11) **EP 2 976 225 B1**
(45) Date of publication and mention of the grant of the patent: **15.11.2017**
(21) Application number: 14722869.6
(22) Date of filing: 14.03.2014
(51) Int. Cl.: B60H 1/32, F25B 1/10

(54) **CAPACITY MODULATION OF TRANSPORT REFRIGERATION SYSTEM**
MODULATION DER KAPAZITÄT EINES TRANSPORTKÜHLSYSTEMS
MODULATION DE CAPACITÉ DE SYSTÈME DE RÉFRIGÉRATION DE TRANSPORT

(30) Priority: 21.03.2013 US 201361803821 P
(43) Date of publication of application: 27.01.2016
(73) Proprietor: Carrier Corporation, Farmington, CT 06034 (US)
(72) Inventor: GAN, Mingfei, Syracuse, New York 13221 (US)
(74) Representative: Taylor, Adam David
(86) International application number: PCT/US2014/027240
(87) International publication number: WO 2014/152349

(56) References cited:
- WO-A1-2012/145156
- WO-A1-2013/016404
- WO-A2-2011/049767

## Description

### FIELD OF INVENTION

The subject matter disclosed herein relates generally to the field of transport refrigeration systems, and more particularly, to capacity modulation of a transport refrigeration system.

### BACKGROUND

Refrigerant vapor compression systems are well known in the art and commonly used for conditioning air to be supplied to a climate controlled comfort zone within a residence, office building, hospital, school, restaurant or other facility. Refrigerant vapor compression systems are also commonly used in refrigerating air supplied to display cases, merchandisers, freezer cabinets, cold rooms or other perishable/frozen product storage area in commercial establishments. Refrigerant vapor compression systems are also commonly used in transport refrigeration systems for refrigerating air supplied to a temperature controlled cargo space of a truck, trailer, container or the like for transporting perishable/frozen items by truck, rail, ship or intermodally.

Refrigerant vapor compression systems used in connection with transport refrigeration systems are generally subject to more stringent operating conditions due to the wide range of operating load conditions and the wide range of outdoor ambient conditions over which the refrigerant vapor compression system must operate to maintain product within the cargo space at a desired temperature. The desired temperature at which the cargo needs to be controlled can also vary over a wide range depending on the nature of cargo to be preserved. The refrigerant vapor compression system must not only have sufficient capacity to rapidly pull down the temperature of product loaded into the cargo space at ambient temperature, but also should operate energy efficiently over the entire load range, including at low load when maintaining a stable product temperature at low ambient temperature during transport.

Existing transport refrigeration systems have difficulty in reducing capacity at low ambient conditions. To achieve low capacity, existing refrigerant vapor compression systems either cycle the compressor on/off or add heat into controlled space. Cycling the refrigerant vapor compression system on/off causes a large fluctuation on control temperature. Adding heat (e.g., through electrical resistance heaters) is energy inefficient and may lead to dehydration of the perishable cargo.

WO 2013/016404 A1 discloses a refrigeration system according to the preamble of claim 1, including a compressor having a first stage and a second stage, a heat rejecting heat exchanger including an intercooler and a gas cooler, the intercooler coupled to an outlet of the first stage and the gas cooler coupled to an outlet of the second stage, and an unload valve coupled to an outlet of the intercooler and a suction port of the first stage.

WO 2011/049767 A2 discloses a refrigerant vapor compression system that includes a controller operative to perform a refrigerant charge detection method.

### BRIEF SUMMARY

According to an exemplary embodiment a refrigerant vapor compression system includes a compression device having at least a first compression stage and a second compression stage arranged in series refrigerant flow relationship; a first refrigerant heat rejection heat exchanger disposed intermediate the first compression stage and the second compression stage for passing the refrigerant passing from the first compression stage to the second compression stage; a second refrigerant heat rejection heat exchanger disposed downstream with respect to refrigerant flow of the second compression stage; a bypass line positioned at at least one of a discharge outlet port of the first compression stage and a discharge outlet port of the second compression stage; a bypass valve disposed in the bypass line, the bypass valve allowing or preventing refrigerant flow through the bypass line; wherein when the bypass valve allows refrigerant flow through the bypass line, at least one of the first compression stage and the second compression stage is bypassed and at least one of the first refrigerant heat rejection heat exchanger and the second refrigerant heat rejection heat exchanger is bypassed.

Other aspects, features, and techniques of embodiments of the invention will become more apparent from the following description taken in conjunction with the drawings.

### BRIEF DESCRIPTION OF THE DRAWINGS

Referring now to the drawings wherein like elements are numbered alike in the FIGURES:
FIG. 1 depicts a refrigerated container in an exemplary embodiment;
FIG. 2 depicts a refrigerant vapor compression system in an exemplary embodiment;
FIG. 3 depicts a refrigerant vapor compression system in an exemplary embodiment; and
FIG. 4 depicts a refrigerant vapor compression system in an exemplary embodiment

### DETAILED DESCRIPTION

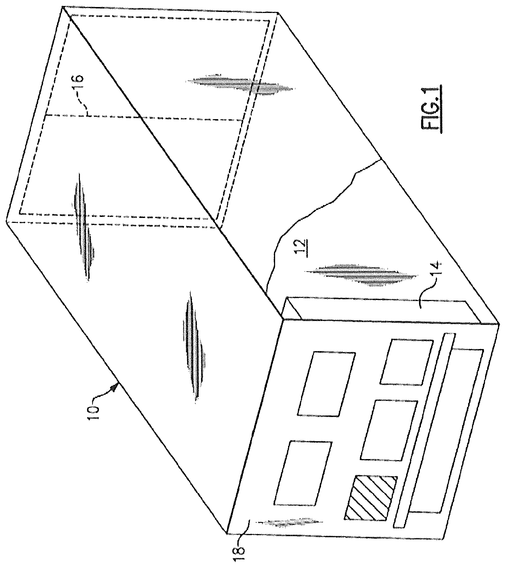

FIG. 1 depicts an exemplary embodiment of a refrigerated container 10 having a temperature controlled cargo space 12, the atmosphere of which is refrigerated by operation of a refrigeration unit 14 associated with the cargo space 12. In the depicted embodiment of the refrigerated container 10, the refrigeration unit 14 is mounted in a wall of the refrigerated container 10, typically in the front wall 18 in conventional practice. However, the refrigeration unit 14 may be mounted in the roof, floor or other walls of the refrigerated container 10. Additionally, the refrigerated container 10 has at least one access door 16 through which perishable goods, or frozen food products, may be loaded into and removed from the cargo space 12 of the refrigerated container 10.

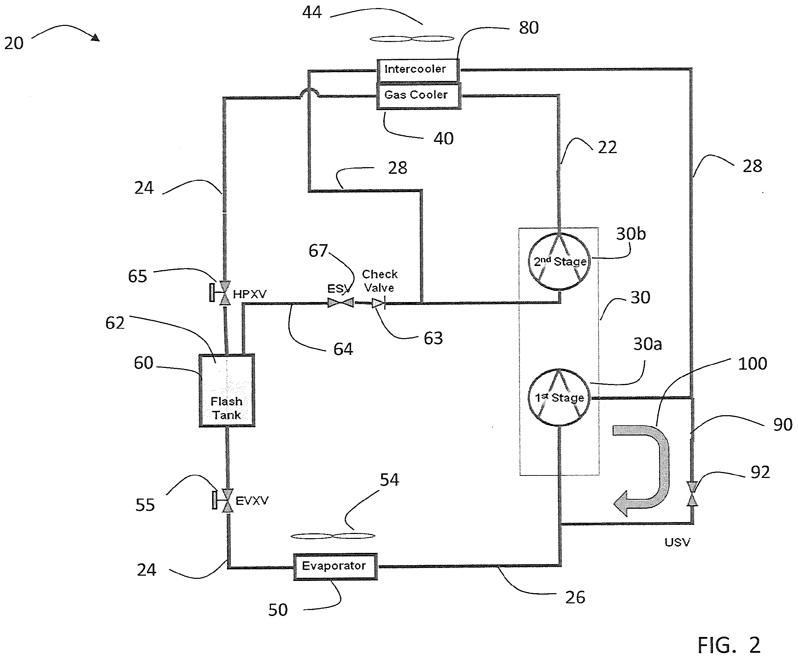

FIG. 2 depicts an exemplary refrigerant vapor compression system 20 suitable for use in the refrigeration unit 14 for refrigerating air drawn from and supplied back to the temperature controlled cargo space 12. Although the refrigerant vapor compression system 20 will be described herein in connection with a refrigerated container 10 of the type commonly used for transporting perishable goods by ship, by rail, by land or intermodally, it is to be understood that the refrigerant vapor compression system 20 may also be used in refrigeration units for refrigerating the cargo space of a truck, a trailer or the like for transporting perishable goods. The refrigerant vapor compression system 20 is also suitable for use in conditioning air to be supplied to a climate controlled comfort zone within a residence, office building, hospital, school, restaurant or other facility. The refrigerant vapor compression system 20 could also be employed in refrigerating air supplied to display cases, merchandisers, freezer cabinets, cold rooms or other perishable and frozen product storage areas in commercial establishments.

The refrigerant vapor compression system 20 includes a multi-stage compression device 30, a refrigerant heat rejection heat exchanger 40, a refrigerant heat absorption heat exchanger 50, also referred to herein as an evaporator, and a primary expansion device 55, such as for example an electronic expansion valve or a thermostatic expansion valve, operatively associated with the evaporator 50, with various refrigerant lines 22, 24, 26, and 28 connecting the aforementioned components in a primary refrigerant circuit. The refrigerant heat rejection heat exchanger 40 is shown as a gas cooler, but may operate as a condenser as described herein.

The compression device 30 functions to compress the refrigerant and to circulate refrigerant through the primary refrigerant circuit as will be discussed in further detail hereinafter. The compression device 30 may comprise a single, multiple-stage refrigerant compressor, for example a reciprocating compressor, having a first compression stage 30a and a second compression stage 30b, or may comprise a pair of compressors 30a and 30b, connected in series refrigerant flow relationship in the primary refrigerant circuit via a refrigerant line 28 connecting the discharge outlet port of the first compression stage compressor 30a in refrigerant flow communication with the suction inlet port of the second compression stage compressor 30b. The first and second compression stages 30a and 30b are disposed in series refrigerant flow relationship with the refrigerant leaving the first compression stage 30a passing to the second compression stage 30b for further compression. In the first compression stage, the refrigerant vapor is compressed from a lower pressure to an intermediate pressure. In the second compression stage, the refrigerant vapor is compressed from an intermediate pressure to higher pressure. In a two compressor embodiment, the compressors may be scroll compressors, screw compressors, reciprocating compressors, rotary compressors or any other type of compressor or a combination of any such compressors.

The refrigerant heat rejection heat exchanger 40 may comprise a finned tube heat exchanger through which hot, high pressure refrigerant discharged from the second compression stage 30b (e.g., the final compression charge) passes in heat exchange relationship with a secondary fluid, most commonly ambient air drawn through the heat rejection heat exchanger 40 by the fan(s) 44. The finned heat rejection heat exchanger 40 may comprise, for example, a fin and round tube heat exchange coil or a fin and flat mini-channel tube heat exchanger. If the pressure of the refrigerant discharging from the second compression stage 30b, commonly referred to as the compressor discharge pressure, exceeds the critical point of the refrigerant, the refrigerant vapor compression system 20 operates in a transcritical cycle and the refrigerant heat rejection heat exchanger 40 functions as a gas cooler. If the compressor discharge pressure is below the critical point of the refrigerant, the refrigerant vapor compression system 20 operates in a subcritical cycle and the refrigerant heat rejection heat exchanger 40 functions as a condenser.

The refrigerant heat absorption heat exchanger 50 may also comprise a finned tube coil heat exchanger, such as a fin and round tube heat exchanger or a fin and flat, mini-channel tube heat exchanger. The refrigerant heat absorption heat exchanger 50 functions as a refrigerant evaporator whether the refrigerant vapor compression system is operating in a transcritical cycle or a subcritical cycle. Before entering the refrigerant heat absorption heat exchanger 50, the refrigerant passing through refrigerant line 24 traverses the expansion device 55, such as, for example, an electronic expansion valve or a thermostatic expansion valve, and expands to a lower pressure and a lower temperature to enter heat absorption heat exchanger 50. As the liquid refrigerant traverses the refrigerant heat absorption heat exchanger 50, the liquid refrigerant passes in heat exchange relationship with a heating fluid whereby the liquid refrigerant is evaporated and typically superheated to a desired degree. The low pressure vapor refrigerant leaving heat absorption heat exchanger 50 passes through refrigerant line 26 to the suction inlet port of the first compression stage 30a. The heating fluid may be air drawn by an associated fan(s) 54 from a climate controlled environment, such as a perishable/frozen cargo storage zone associated with a transport refrigeration unit, or a food display or storage area of a commercial establishment, or a building comfort zone associated with an air conditioning system, to be cooled, and generally also dehumidified, and thence returned to a climate controlled environment.

The refrigerant vapor compression system 20 further includes an economizer circuit associated with the primary refrigerant circuit. The economizer circuit includes an economizer device 60, an economizer circuit expansion device 65, and a vapor injection line 64 in refrigerant flow communication with an intermediate pressure stage of the compression process. In the embodiments depicted in FIG. 2, the economizer device comprises a flash tank economizer 60. It is understood that other types of economizer devices may be used, such as a refrigerant-to-refrigerant heat exchanger. The economizer expansion device 65 may, for example, be an electronic expansion valve, a thermostatic expansion valve or a fixed orifice expansion device.

Flash tank economizer 60 is interdisposed in refrigerant line 24 between the refrigerant heat rejection heat exchanger 40 and the primary expansion device 55. The economizer circuit expansion device 65 is disposed in refrigerant line 24 upstream of the flash tank economizer 60. The flash tank economizer 60 defines a chamber 62 into which expanded refrigerant having traversed the economizer circuit expansion device 65 enters and separates into a liquid refrigerant portion and a vapor refrigerant portion. The liquid refrigerant collects in the chamber 62 and is metered therefrom through the downstream leg of refrigerant line 24 by the primary expansion device 55 to flow to the refrigerant heat absorption heat exchanger 50. The vapor refrigerant collects in the chamber 62 above the liquid refrigerant and passes therefrom through vapor injection line 64 for injection of refrigerant vapor into an intermediate stage of the compression device 30.

The vapor injection line 64 communicates with refrigerant line 28 downstream of intercooler 80, interconnecting the outlet of the first compression stage 30a to the inlet of the second compression stage 30b. A check valve 63 may be interdisposed in vapor injection line 64 upstream of its connection with refrigerant line 28 to prevent backflow through vapor injection line 64. An economizer solenoid valve (ESV) 67 may be interdisposed in vapor injection line 64 to enable or disable operation of the refrigeration system 20 in economizer mode. It is to be understood, however, that refrigerant vapor injection line 64 can open directly into an intermediate stage of the compression device 30 rather than opening into refrigerant line 28.

To improve the energy efficiency and cooling capacity of the refrigerant vapor compression system 20, particularly when operating in a transcritical cycle and charged with carbon dioxide or a mixture including carbon dioxide as the refrigerant, the refrigerant vapor compression system 20 includes a further refrigerant heat rejecting heat exchanger in the form of an intercooler 80. Intercooler 80 is interdisposed in refrigerant line 28 of the primary refrigerant circuit between the first compression stage 30a and the second compression stage 30b, as depicted in FIG. 2. The intercooler 80 comprises a refrigerant-to-secondary fluid heat exchanger, such as for example a finned tube heat exchanger, through which intermediate temperature, intermediate pressure refrigerant passing from the first compression stage 30a to the second compression stage 30b passes in heat exchange relationship with ambient air drawn through the intercooler 80 by the fan(s) 44. The intercooler 80 may comprise, for example, a fin and round tube heat exchange coil or a fin and flat mini-channel tube heat exchanger.

As noted above, it is necessary to reduce capacity of the refrigerant vapor compression system at times (e.g., at low ambient temperature). In the embodiment of FIG. 2, a bypass line 90 connects a discharge outlet port of the first compression stage 30a to an suction inlet port of the first compression stage 30a. Bypass line 90 also connects refrigerant line 28 (inlet to intercooler 80) to refrigerant line 26 (outlet of evaporator 50). A bypass valve 92 is positioned in the bypass line 90 and may be opened or closed by a controller to control capacity of the refrigerant vapor compression system 20. Bypass valve 92 may be a solenoid valve, having open-closed states, or an electronically controlled valve providing a multitude of flow rates.

FIG. 2 depicts a mode where bypass valve 92 is open. Arrow 100 indicates a flow of refrigerant from the discharge outlet port of first compression stage 30a to a suction inlet port of first compression stage 30a. It is noted that intercooler 80 is also bypassed, by virtue of the bypass line 90 being connected to refrigerant line 28, the inlet to intercooler 80, and refrigerant line 26, inlet to first compression stage 30a. Thus, the system of FIG. 2 provides a bypass of one compression stage (e.g., first compression stage 30a) and one refrigerant heat rejecting heat exchanger (e.g., intercooler 80).

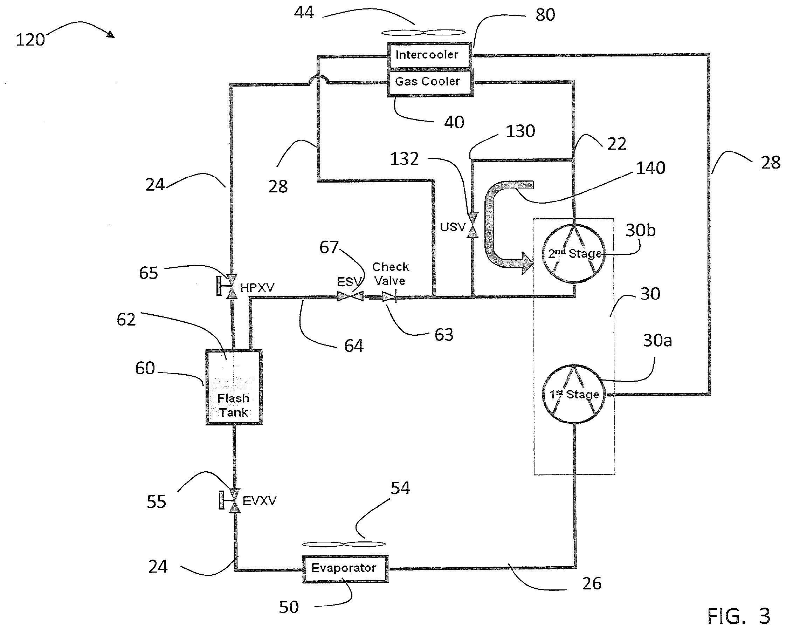

FIG. 3 depicts an exemplary refrigerant vapor compression system 120 suitable for use in the refrigeration unit 14 for refrigerating air drawn from and supplied back to the temperature controlled cargo space 12. Elements of refrigeration system 120 corresponding to elements in FIG. 2 are labeled with the same reference numeral. In the embodiment of FIG. 3, a bypass line 130 connects a discharge outlet port of the second compression stage 30b to a suction inlet port of the second compression stage 30b. Bypass line 130 also connects refrigerant line 22 (inlet to gas cooler 40) to refrigerant line 64 (outlet of economizer 60). A bypass valve 132 is positioned in the bypass line 130 and may be opened or closed by a controller to control capacity of the refrigerant vapor compression system 120. Bypass valve 132 may be a solenoid valve, having open-closed states, or an electronically controlled valve providing a multitude of flow rates.

FIG. 3 depicts a mode where bypass valve 132 is open. Arrow 140 indicates a flow of refrigerant from the discharge outlet port of second compression stage 30b to a suction inlet port of second compression stage 30b. It is noted that gas cooler 40 is also bypassed, by virtue of the bypass line 130 being connected to refrigerant line 22, the inlet to gas cooler 40, and vapor injection line 64, inlet to second compression stage 30b. Thus, the system of FIG. 3 provides a bypass of one compression stage (e.g., second compression stage 30b) and one refrigerant heat rejecting heat exchanger (e.g., gas cooler 40).

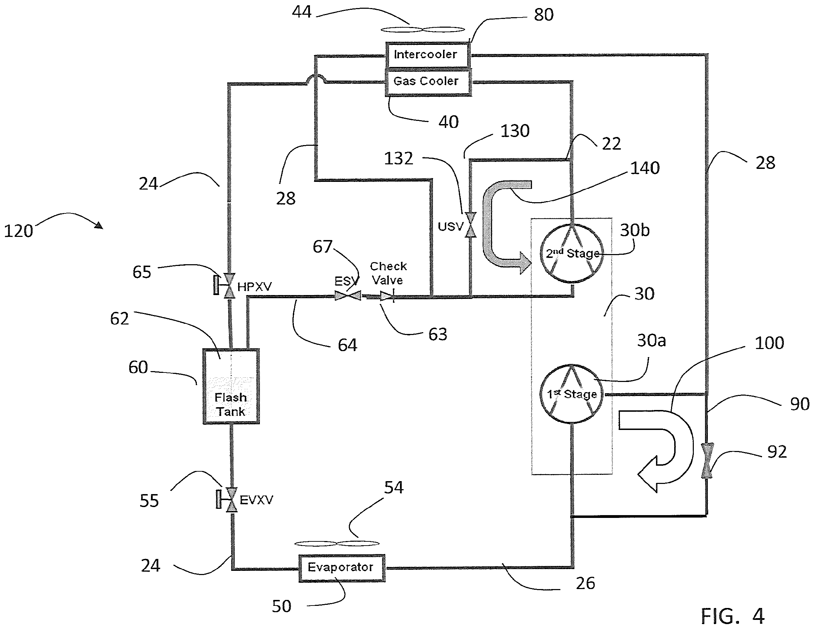

The bypass line 90 and bypass valve 92 of FIG. 2 may be used in conjunction with bypass line 130 and bypass valve 132 of FIG. 3. FIG. 4 depicts an exemplary embodiment including bypass line 90, bypass valve 92, bypass line 130 and bypass valve 132. If both bypass valve 90 and bypass valve 132 are open, then all of first compression stage 30a, second compression stage 30b, first refrigerant heat rejecting heat exchanger 80 and second refrigerant heat rejecting heat exchanger 40 are bypassed, to further reduce capacity.

The capacity modulation embodiments disclosed herein may also be used in conjunction with other capacity modulation techniques. For example, embodiments disclosed herein may be used along with a variable frequency drive (VFD) to modulate the compressor capacity. Alternatively, embodiments disclosed herein may be used along digital scroll compressor providing capacity modulation. Other known capacity modulation techniques may be used with the embodiments disclosed herein.

Embodiments described herein reduce the cooling capacity of the refrigerant vapor compression system without compromising temperature control and cargo quality/energy efficiency. In addition, compressor reliability can be improved by preventing condensated refrigerant from entering the compressor through intermediate heat rejection device 80, for example.

The terminology used herein is for the purpose of describing particular embodiments only and is not intended to be limiting of the invention. While the description of the present invention has been presented for purposes of illustration and description, it is not intended to be exhaustive or limited to the invention in the form disclosed. Many modifications, variations, alterations, substitutions, or equivalent arrangement not hereto described will be apparent to those of ordinary skill in the art without departing from the scope of the invention. Additionally, while the various embodiments of the invention have been described, it is to be understood that aspects of the invention may include only some of the described embodiments. Accordingly, the invention is not to be seen as being limited by the foregoing description, but is only limited by the scope of the appended claims. Features shown with one embodiment may be used with any other embodiment even if not described with the other embodiments.

## Claims

1. A refrigerant vapor compression system (20) comprising:
a compression device (30) having at least a first compression stage (30a) and a second compression stage (30b) arranged in series refrigerant flow relationship;
a first refrigerant heat rejection heat exchanger (80) disposed intermediate the first compression stage and the second compression stage for passing refrigerant passing from the first compression stage to the second compression stage;
a second refrigerant heat rejection heat exchanger disposed (40) downstream with respect to refrigerant flow of the second compression stage;
a bypass line (90; 130)
a bypass valve (92; 132) disposed in the bypass line, the bypass valve allowing or preventing refrigerant flow through the bypass line;
wherein when the bypass valve allows refrigerant flow through the bypass line, at least one of the first compression stage and the second compression stage is bypassed and at least one of the first refrigerant heat rejection heat exchanger and the second refrigerant heat rejection heat exchanger is bypassed;
**characterised in that** the bypass line (90,130) is positioned at at least one of a discharge outlet port of the first compression stage (30a) and a discharge outlet port of the second compression stage (30b).

2. The refrigerant vapor compression system (20) of claim 1 further comprising:
a refrigerant line (28) connecting the discharge outlet port of the first compression stage (30a) to an inlet of the first refrigerant heat rejection heat exchanger (80);
wherein the bypass line (90) connects the discharge outlet port of the first compression stage to an suction inlet port of the first compression stage; and
the bypass line connects the refrigerant line to the suction inlet port of the first compression stage.

3. The refrigerant vapor compression system (20) of claim 1 further comprising:
a refrigerant line (22) connecting the discharge outlet port of the second compression stage (30b) to an inlet of the second refrigerant heat rejection heat exchanger (40);
wherein the bypass line (130) connects the discharge outlet port of the second compression stage to an suction inlet port of the second compression stage; and
the bypass line connects the refrigerant line to the suction inlet port of the second compression stage.

4. The refrigerant vapor compression system (20) of claim 1 wherein:
the bypass line includes a first bypass line (90) and a second bypass line (130), the first bypass line connecting the discharge outlet port of the first compression stage (30a) to a suction inlet port of the first compression stage, the second bypass line connecting the discharge outlet port of the second compression stage (30b) to a suction inlet port of the second compression stage;
the bypass valve includes a first bypass valve (92) and a second bypass valve (132), the first bypass valve disposed in the first bypass line, the first bypass valve allowing or preventing refrigerant flow through the first bypass line, the second bypass valve disposed in the second bypass line, the second bypass valve allowing or preventing refrigerant flow through the second bypass line; and
when the first bypass valve allows refrigerant flow through the first bypass line and the second bypass valve allows refrigerant flow through the second bypass line, each of the first compression stage, the second compression stage, the first refrigerant heat rejection heat exchanger (80) and the second refrigerant heat rejection heat exchanger (40) is bypassed.

5. The refrigerant vapor compression system (20) of claim 4 further comprising:
a first refrigerant line (28) connecting the discharge outlet port of the first compression stage (30a) to an inlet of the first refrigerant heat rejection heat exchanger (80);
wherein the first bypass line (90) connects the first refrigerant line to the suction inlet port of the first compression stage.

6. The refrigerant vapor compression system (20) of claim 5 further comprising:
a second refrigerant line (22) connecting the discharge outlet port of the second compression stage (30b) to an inlet of the second refrigerant heat rejection heat exchanger (40);
the second bypass line (130) connecting the second refrigerant line to the suction inlet port of the second compression stage.

7. The refrigerant vapor compression system (20) of claim 1 further comprising:
an economizer (60) disposed downstream with respect to refrigerant flow of the second refrigerant heat rejection heat exchanger (40);
a vapor injection line (64) communicating refrigerant from the economizer to a suction inlet port of the second compression stage (30b).

8. The refrigerant vapor compression system (20) of claim 7 further comprising:
a refrigerant heat absorption heat exchanger (50) disposed downstream with respect to refrigerant flow of the economizer (60);
an outlet of the refrigerant heat absorption heat exchanger coupled to the suction inlet port of the first compression stage (30a).

9. The refrigerant vapor compression system (20) of claim 7 wherein:
the economizer (60) is a flash tank economizer.

10. The refrigerant vapor compression system (20) of claim 7 wherein:
the economizer (60) is a refrigerant-to-refrigerant heat exchanger.

11. The refrigerant vapor compression system (20) of claim 1 wherein:
the refrigerant comprises carbon dioxide.

12. The refrigerant vapor compression system (20) of claim 1 further comprising at least one fan (44) operatively associated with the first refrigerant heat rejection heat exchanger (80) and the second refrigerant heat rejection heat exchanger (40) for moving a flow of air through the first refrigerant heat rejection heat exchanger and the second refrigerant heat rejection heat exchanger.

13. A refrigerated container (10) for use in transporting perishable goods including a refrigeration system incorporating the refrigerant vapor compression system (20) as recited in claim 1.

## Patentansprüche

1. Kühlmitteldampfverdichtungssystem (20), das Folgendes umfasst:
eine Verdichtungsvorrichtung (30), die mindestens eine erste Verdichtungsstufe (30a) aufweist und eine zweite Verdichtungsstufe (30b), die in einem Kühlmittelstromverhältnis hintereinander angeordnet sind;
ein erster Kühlmittelwärmeausstoßwärmetauscher (80), der zwischen der ersten Verdichtungsstufe und der zweiten Verdichtungsstufe angeordnet ist zum Hindurchlaufen von Kühlmittel, das von der ersten Verdichtungsstufe zur zweiten Verdichtungsstufe hindurchläuft;
ein zweiter Kühlmittelwärmeausstoßwärmetauscher (40), der stromabwärts in Bezug auf Kühlmittelstrom der zweiten Verdichtungsstufe angeordnet (40) ist;
eine Umgehungsleitung (90; 130)
ein Umgehungsventil (92; 132), das in der Umgehungsleitung angeordnet ist, wobei das Umgehungsventil den Kühlmittelstrom durch die Umgehungsleitung ermöglicht oder verhindert;
wobei, wenn das Umgehungsventil den Kühlmittelfluss durch die Umgehungsleitung ermöglicht, mindestens eine der ersten Verdichtungsstufe und der zweiten Verdichtungsstufe umgangen ist und mindestens einer des ersten Kühlmittelwärmeausstoßwärmetauschers und des zweiten Kühlmittelwärmeausstoßwärmetauschers umgangen ist;
**dadurch gekennzeichnet, dass** die Umgehungsleitung (90, 130) an mindestens einem eines Auslassöffnungsanschlusses der ersten Verdichtungsstufe (30a) und eines Auslassöffnungsanschlusses der zweiten Verdichtungsstufe (30b) positioniert ist.

2. Kühlmitteldampfverdichtungssystem (20) nach Anspruch 1, das ferner Folgendes umfasst:
eine Kühlmittelleitung (28), die den Auslassöffnungsanschluss der ersten Verdichtungsstufe (30a) mit einem Einlass des ersten Kühlmittelwärmeausstoßwärmetauschers (80) verbindet;
wobei die Umgehungsleitung (90), den Auslassöffnungsanschluss der ersten Verdichtungsstufe mit einem Ansaugeinlassanschluss der ersten Verdichtungsstufe verbindet; und
wobei die Umgehungsleitung die Kühlmittelleitung mit dem Ansaugeinlassanschluss der ersten Verdichtungsstufe verbindet.

3. Kühlmitteldampfverdichtungssystem (20) nach Anspruch 1, das ferner Folgendes umfasst:
eine Kühlmittelleitung (22), die den Auslassöffnungsanschluss der zweiten Verdichtungsstufe (30b) mit einem Einlass des zweiten Kühlmittelwärmeausstoßwärmetauschers (40) verbindet;
wobei die Umgehungsleitung (130) den Auslassöffnungsanschluss der zweiten Verdichtungsstufe mit einem Ansaugeinlassanschluss der zweiten Verdichtungsstufe verbindet; und
wobei die Umgehungsleitung die Kühlmittelleitung mit dem Ansaugeinlassanschluss der zweiten Verdichtungsstufe verbindet.

4. Kühlmitteldampfverdichtungssystem (20) nach Anspruch 1, wobei:
die Umgehungsleitung eine erste Umgehungsleitung (90) beinhaltet und eine zweite Umgehungsleitung (130), wobei die erste Umgehungsleitung den Auslassöffnungsanschluss der ersten Verdichtungsstufe (30a) mit dem Ansaugeinlassanschluss der ersten Verdichtungsstufe verbindet, wobei die zweite Umgehungsleitung den Auslassöffnungsanschluss der zweiten Verdichtungsstufe (30b) mit einem Ansaugeinlassanschluss der zweiten Verdichtungsstufe verbindet;
das Umgehungsventil ein erstes Umgehungsventil (92) und ein zweites Umgehungsventil (132) beinhaltet, wobei das erste Umgehungsventil in der ersten Umgehungsleitung angeordnet ist, wobei das erste Umgehungsventil Kühlmittelstrom durch die erste Umgehungsleitung ermöglicht oder verhindert, wobei das zweite Umgehungsventil in der zweiten Umgehungsleitung angeordnet ist, wobei das zweite Umgehungsventil Kühlmittelstrom durch die zweite Umgehungsleitung ermöglicht oder verhindert; und
wenn das erste Umgehungsventil Kühlmittelstrom durch die erste Umgehungsleitung ermöglicht und das zweite Umgehungsventil Kühlmittelstrom durch die zweite Umgehungsleitung ermöglicht, jede der ersten Verdichtungsstufe, der zweiten Verdichtungsstufe, des ersten Kühlmittelwärmeausstoßwärmetauschers (80) und des zweiten Kühlmittelwärmeausstoßwärmetauschers (40) umgangen ist.

5. Kühlmitteldampfverdichtungssystem (20) nach Anspruch 4, das ferner Folgendes umfasst:
eine erste Kühlmittelleitung (28), die den Auslassöffnungsanschluss der ersten Verdichtungsstufe (30a) mit einem Einlass des ersten Kühlmittelwärmeausstoßwärmetauschers (80) verbindet;
wobei die erste Umgehungsleitung (90) die erste Kühlmittelleitung mit dem Ansaugeinlassanschluss der ersten Verdichtungsstufe verbindet.

6. Kühlmitteldampfverdichtungssystem (20) nach Anspruch 5, das ferner Folgendes umfasst:
eine zweite Kühlmittelleitung (22), die den Auslassöffnungsanschluss der zweiten Verdichtungsstufe (30b) mit einem Einlass des zweiten Kühlmittelwärmeausstoßwärmetauschers (40) verbindet;
wobei die zweite Umgehungsleitung (130) die zweite Kühlmittelleitung mit dem Ansaugeinlassanschluss der zweiten Verdichtungsstufe verbindet.

7. Kühlmitteldampfverdichtungssystem (20) nach Anspruch 1, das ferner Folgendes umfasst:
einen Economiser (60), der stromabwärts in Bezug auf den Kühlmittelstrom des zweiten Kühlmittelwärmeausstoßwärmetauschers (40) angeordnet ist;
eine Dampfeinspritzleitung (64), die Kühlmittel vom Economiser zu einem Ansaugeinlassanschluss der zweiten Verdichtungsstufe (30b) kommuniziert.

8. Kühlmitteldampfverdichtungssystem (20) nach Anspruch 7, das Folgendes umfasst:
einen Kühlmittelwärmeaufnahmewärmetauscher (50), der in Bezug auf Kühlmittelstrom des Economisers (60) angeordnet ist;
einen Auslass des Kühlmittelwärmeaufnahmewärmetauschers, der an den Ansaugeinlassanschluss der ersten Verdichtungsstufe (30a) gekoppelt ist.

9. Kühlmitteldampfverdichtungssystem (20) nach Anspruch 7, wobei:
der Economiser (60) ein Entspannungsbehälter-Economiser ist.

10. Kühlmitteldampfverdichtungssystem (20) nach Anspruch 7, wobei:
der Economiser (60) ein Kühlmittel-zu-Kühlmittel-Wärmetauscher ist.

11. Kühlmitteldampfverdichtungssystem (20) nach Anspruch 1, wobei:
das Kühlmittel Kohlenstoffdioxid umfasst.

12. Kühlmitteldampfverdichtungssystem (20) nach Anspruch 1, das ferner mindestens ein Gebläse (44) umfasst, das mit dem ersten Kühlmittelwärmeausstoßwärmetauscher (80) und dem zweiten Kühlmittelwärmeausstoßwärmetauscher (40) wirkverbunden ist, zum Bewegen eines Luftstromes durch den ersten Kühlmittelwärmeausstoßwärmetauscher und den zweiten Kühlmittelwärmeausstoßwärmetauscher.

13. Gekühlter Behälter (10) zur Verwendung beim Transport verderblicher Waren, der ein Kühlmitteldampfverdichtungssystem (20) nach Anspruch 1 einschließt.

## Revendications

1. Système de compression de vapeur de fluide frigorigène (20) comprenant :
un dispositif de compression (30) ayant au moins un premier étage de compression (30a) et un second étage de compression (30b) agencés dans une relation d'écoulement de fluide frigorigène en série ;
un premier échangeur de chaleur à rejet de chaleur de fluide frigorigène (80) disposé entre le premier étage de compression et le second étage de compression pour faire passer le fluide frigorigène passant du premier étage de compression au second étage de compression ;
un second échangeur de chaleur à rejet de chaleur de fluide frigorigène disposé (40) en aval par rapport à l'écoulement de fluide frigorigène du second étage de compression ;
une ligne de dérivation (90 ; 130)
une soupape de dérivation (92 ; 132) disposée dans la ligne de dérivation, la soupape de dérivation permettant ou empêchant l'écoulement de fluide frigorigène à travers la ligne de dérivation ;
dans lequel lorsque la soupape de dérivation permet l'écoulement de fluide frigorigène à travers la ligne de dérivation, au moins l'un du premier étage de compression et du second étage de compression est contourné et au moins l'un du premier échangeur de chaleur à rejet de chaleur de fluide frigorigène et du second échangeur de chaleur à rejet de chaleur de fluide frigorigène est contourné ;
**caractérisé en ce que** la ligne de dérivation (90, 130) est positionnée au niveau d'au moins l'un d'un orifice de sortie de décharge du premier étape de compression (30a) et d'un orifice de sortie de décharge du second étage de compression (30b).

2. Système de compression de vapeur de fluide frigorigène (20) selon la revendication 1 comprenant en outre :
une ligne de fluide frigorigène (28) reliant l'orifice de sortie de décharge du premier étage de compression (30a) à une entrée du premier échangeur de chaleur à rejet de chaleur de fluide frigorigène (80) ;
dans lequel la ligne de dérivation (90) relie l'orifice de sortie de décharge du premier étage de compression à un orifice d'entrée d'aspiration du premier étage de compression ; et
la ligne de dérivation relie la ligne de fluide frigorigène à l'orifice d'entrée d'aspiration du premier étage de compression.

3. Système de compression de vapeur de fluide frigorigène (20) selon la revendication 1 comprenant en outre :
une ligne de fluide frigorigène (22) reliant l'orifice de sortie de décharge du second étage de compression (30b) à une entrée du second échangeur de chaleur à rejet de chaleur de fluide frigorigène (40) ;
dans lequel la ligne de dérivation (130) relie l'orifice de sortie de décharge du second étage de compression à un orifice d'entrée d'aspiration du second étage de compression ; et
la ligne de dérivation relie la ligne de fluide frigorigène à l'orifice d'entrée d'aspiration du second étage de compression.

4. Système de compression de vapeur de fluide frigorigène (20) selon la revendication 1 dans lequel :
la ligne de dérivation comprend une première ligne de dérivation (90) et une seconde ligne de dérivation (130), la première ligne de dérivation reliant l'orifice de sortie de décharge du premier étage de compression (30a) à un orifice d'entrée d'aspiration du premier étage de compression, la seconde ligne de dérivation reliant l'orifice de sortie de décharge du second étage de compression (30b) à un orifice d'entrée d'aspiration du second étage de compression ;
la soupape de dérivation comprend une première soupape de dérivation (92) et une seconde soupape de dérivation (132), la première soupape de dérivation disposée dans la première ligne de dérivation, la première soupape de dérivation permettant ou empêchant l'écoulement de fluide frigorigène à travers la première ligne de dérivation, la seconde soupape de dérivation disposée dans la seconde ligne de dérivation, la seconde soupape de dérivation permettant ou empêchant l'écoulement de fluide frigorigène à travers la seconde ligne de dérivation ; et
lorsque la première soupape de dérivation permet l'écoulement de fluide frigorigène à travers la première ligne de dérivation et que la seconde soupape de dérivation permet l'écoulement de fluide frigorigène à travers la seconde ligne de dérivation, chacun du premier étage de compression, du second étage de compression, du premier échangeur de chaleur à rejet de chaleur de fluide frigorigène (80) et du second échangeur de chaleur à rejet de chaleur de fluide frigorigène (40) est contourné.

5. Système de compression de vapeur de fluide frigorigène (20) selon la revendication 4 comprenant en outre :
une première ligne de fluide frigorigène (28) reliant l'orifice de sortie de décharge du premier étage de compression (30a) à une entrée du premier échangeur de chaleur à rejet de chaleur de fluide frigorigène (80) ;
dans lequel la première ligne de dérivation (90) relie la première ligne de fluide frigorigène à l'orifice d'entrée d'aspiration du premier étage de compression.

6. Système de compression de vapeur de fluide frigorigène (20) selon la revendication 5 comprenant en outre :
une seconde ligne de fluide frigorigène (22) reliant l'orifice de sortie de décharge du second étage de compression (30b) à une entrée du second échangeur de chaleur à rejet de chaleur de fluide frigorigène (40) ;
la seconde ligne de dérivation (130) reliant la seconde ligne de fluide frigorigène à l'orifice d'entrée d'aspiration du second étage de compression.

7. Système de compression de vapeur de fluide frigorigène (20) selon la revendication 1 comprenant en outre :
un économiseur (60) disposé en aval par rapport à l'écoulement de fluide frigorigène du second échangeur de chaleur à rejet de chaleur de fluide frigorigène (40) ;
une ligne d'injection de vapeur (64) faisant communiquer le fluide frigorigène de l'économiseur à un orifice d'entrée d'aspiration du second étage de compression (30b).

8. Système de compression de vapeur de fluide frigorigène (20) selon la revendication 7 comprenant en outre :
un échangeur de chaleur à absorption de chaleur de fluide frigorigène (50) disposé en aval par rapport à l'écoulement de fluide frigorigène de l'économiseur (60) ;
une sortie de l'échangeur de chaleur à absorption de chaleur de fluide frigorigène couplée à l'orifice d'entrée d'aspiration du premier étage de compression (30a).

9. Système de compression de vapeur de fluide frigorigène (20) selon la revendication 7 dans lequel :
l'économiseur (60) est un économiseur de réservoir de détente.

10. Système de compression de vapeur de fluide frigorigène (20) selon la revendication 7 dans lequel :
l'économiseur (60) est un échangeur de chaleur fluide frigorigène-fluide frigorigène.

11. Système de compression de vapeur de fluide frigorigène (20) selon la revendication 1 dans lequel :
le fluide frigorigène comprend du dioxyde de carbone.

12. Système de compression de vapeur de fluide frigorigène (20) selon la revendication 1 comprenant en outre au moins un ventilateur (44) associé de manière opérationnelle au premier échangeur de chaleur à rejet de chaleur de fluide frigorigène (80) et au second échangeur de chaleur à rejet de chaleur de fluide frigorigène (40) pour déplacer un écoulement d'air à travers le premier échangeur de chaleur à rejet de chaleur de fluide frigorigène et le second échangeur de chaleur à rejet de chaleur de fluide frigorigène.

13. Contenant réfrigéré (10) destiné à être utilisé dans le transport de produits périssables comprenant un système de réfrigération incorporant le système de compression de vapeur de fluide frigorigène (20) selon la revendication 1.
